# EUROPEAN PATENT APPLICATION

(11) **EP 3 896 691 A1**
(43) Date of publication of application: **20.10.2021**
(21) Application number: 19905540.1
(22) Date of filing: 28.12.2019
(51) Int. Cl.: G10L 17/06

(54) **SPEECH INTERACTION METHOD, DEVICE AND SYSTEM**

(30) Priority: 29.12.2018 CN 201811644940
(71) Applicant: Huawei Technologies Co., Ltd., Longgang District, Shenzhen, Guangdong 518129, (CN)
(72) Inventor: ZHENG, Minghui, Shenzhen, Guangdong 518129 (CN)
(74) Representative: Gill Jennings & Every LLP
(86) International application number: PCT/CN2019/129631
(87) International publication number: WO 2020/135811

(57) **Abstract**

A voice interaction method includes: after detecting a voice interaction initiating indication, a terminal enters a voice interaction working state; the terminal receives first voice information, and outputs a processing result for the first voice information; the terminal receives second voice information, and determines whether a sender of the second voice information and a sender of the first voice information are a same user; and if determining that the senders are the same user, the terminal outputs a processing result in response to the second voice information, or if determining that the senders are different users, the terminal ends the voice interaction working state. That a voice command can be continuously sent to a system without a user saying a wakeup keyword again after a session is supported by enhancing, in a voice interaction process, conversation intention recognition of a speaker. For example, whether received voice information continues to be responded to is decided by determining whether a person who continues speaking is the same speaker. This effectively reduces voice interaction, and in particular, redundant wakeup in voice interaction in a conference.

## Description

### TECHNICAL FIELD

This application relates to the field of human-machine interaction technologies, and in particular, to a human-machine voice interaction method, a device, and a system.

### BACKGROUND

With emergence of artificial intelligence, voice interaction, as a new interaction technology, has been widely used in various industries: a home smart speaker, a voice control vehicle-mounted terminal, a personal voice assistant, conference system voice control, and the like. Compared with mouse and keyboard interaction and touch interaction, the voice interaction has many advantages, such as being non-contact, setting hands and eyes free, and being natural (no need to learn). Limited by a current technology level of artificial intelligence, a voice interaction system cannot completely simulate a conversation as smooth and intelligent as a natural conversation between people. For example, the current voice interaction system cannot yet actively determine whether a nearby speaker is speaking to the system, and can receive a voice instruction only when a specific event is triggered. The specific event herein may be that a user says a specified preset wakeup keyword, makes a specific sound, makes a specific gesture action, presses a physical button, taps an icon on a screen, or the like. The advantage of the voice interaction can be best exploited when the wakeup keyword is triggered, and that the wakeup keyword is triggered is also a most popular wakeup mode applied in the current voice interaction system. However, after the voice system is woken up for the first time, when a voice instruction of the user is executed or a session ends, if the user immediately wants to send a next voice instruction or enter a next session, the user needs to speak the wakeup keyword again. This interaction process is very different from a language communication habit between people (when people talk, if a conversation does not end obviously, even if a topic is changed, people do not need to repeatedly call names of each other to maintain the conversation). Therefore, the following adverse consequence is caused: The user often forgets to say the wakeup keyword in a conversation with the system, and this affects continuity of the conversation. This is also a common problem existing in all current voice interaction systems.

Chinese Patent Application CN108182943A discloses an intelligent device control method and apparatus, and an intelligent device. The intelligent device control method includes: maintaining a working state after responding to an interaction instruction corresponding to first voice information of a user; after receiving second voice information of a user, obtaining a voice recognition result corresponding to the second voice information of the user; determining, based on the voice recognition result, whether a degree of correlation between the second voice information of the user and the first voice information of the user is greater than or equal to a preset degree of correlation; and if the degree of correlation is greater than or equal to the preset degree of correlation, responding to a target interaction instruction, where the target interaction instruction is an interaction instruction corresponding to the second voice information of the user. According to the patent solution, after the intelligent device is woken up by the user, when interacting with the intelligent device for a plurality of times on content of a same topic, the user does not need to wake up the intelligent device again. However, in the patent solution, the second voice information of the user needs to be strongly correlated, on the content (the same topic), with the first voice information of the user, so that the intelligent device does not need to be woken up again. In an actual application, a topic may be frequently changed. For example, after enabling a voice system to turn on a desk lamp, the user then wants to listen to a song. In this scenario, the user still needs to wake up the system again. Chinese Patent Application CN105912092A discloses a method: When a machine detects a sound signal of a non-wakeup keyword, a system enables human body/face detection, or uses a sound source positioning method to adjust, based on a sound, a shooting angle of a camera, to continue performing image detection; if detecting a human body/face, the system wakes up the machine to start voice recognition. However, a disadvantage of the solution is that the solution involves only wakeup of one session, and ignores a requirement for continuous sessions. In addition, when the user does not speak to the machine for a long time, a strict wakeup mechanism is necessary. In this case, because only simple sound volume and the image detection are used as features for determining, a wakeup threshold is reduced, and precision is not high enough.

### SUMMARY

This application provides a voice interaction method, a terminal device, and a system, to reduce redundant wakeup in a voice interaction process by determining a user's intention of continuing a conversation, thereby improving user experience.

According to a first aspect, a voice interaction method is provided. The method includes: A terminal detects a voice interaction initiating indication; the terminal enters a voice interaction working state in response to the voice interaction initiating indication; the terminal receives first voice information, and outputs a processing result for the first voice information; the terminal receives second voice information, and determines whether a sender of the second voice information and a sender of the first voice information are a same user; and if determining that the senders are the same user, the terminal outputs a processing result in response to the second voice information, or if determining that the senders are different users, the terminal ends the voice interaction working state.

In a possible design, that the terminal determines whether a sender of the second voice information and a sender of the first voice information are a same user includes: The terminal separately obtains a feature of the first voice information and a feature of the second voice information when receiving the first voice information and the second voice information; and the terminal determines, based on a comparison result of the feature of the first voice information and the feature of the second voice information, whether the sender of the second voice information and the sender of the first voice information are the same user.

In a possible design, the voice feature information is voiceprint model information.

In a possible design, that the terminal determines whether a sender of the second voice information and a sender of the first voice information are a same user includes: The terminal separately obtains direction information or distance information of a user when receiving the first voice information and the second voice information; and the terminal determines, based on the direction information or the distance information of the user, whether the sender of the second voice information and the sender of the first voice information are the same user.

In a possible design, the terminal uses infrared sensing to detect the distance information of the user, or uses a microphone array to detect the direction information of the user.

In a possible design, that the terminal determines whether a sender of the second voice information and a sender of the first voice information are a same user includes: The terminal separately obtains facial feature information of a user when receiving the first voice information and the second voice information; and the terminal determines, by comparing the facial feature information of the user, whether the sender of the second voice information and the sender of the first voice information are the same user.

In a possible design, after determining that the sender of the second voice information and the sender of the first voice information are the same user, the terminal further determines whether a face orientation of the user meets a preset threshold. When the face orientation of the user meets the preset threshold, the terminal outputs the processing result for the second voice information, and otherwise, the terminal ends the voice interaction working state.

In a possible design, the determining whether a face orientation of the user meets a preset threshold includes: determining an offset between a visual center point of a voice interaction interface and a camera position, and determining, based on the offset, whether the face orientation of the user meets the preset threshold.

In a possible design, that the terminal enters a voice interaction working state includes: The terminal displays a first voice interaction interface; after the terminal outputs the processing result for the first voice information, the terminal displays a second voice interaction interface, where the first voice interaction interface is different from the second voice interaction interface; and that the terminal ends the voice interaction working state includes: The terminal cancels the second voice interaction interface.

According to a second aspect, a terminal for implementing intelligent voice interaction is provided, including a voice interaction module and a continue conversation intention determining module. The voice interaction module is configured to: implement intelligent voice interaction, and output a targeted processing result based on received voice information. The continue conversation intention determining module is configured to determine whether received first voice information and received second voice information are from a same user. The first voice information is voice information received after the voice interaction module responds to a voice interaction initiating indication, and the second voice information is voice information received after the voice interaction module outputs a processing result for the first voice information.

In a possible design, that the continue conversation intention determining module determines whether received first voice information and received second voice information are from a same user includes: The continue conversation intention determining module determines, based on a comparison result of a feature of the first voice information and a feature of the second voice information, whether a sender of the second voice information and a sender of the first voice information are the same user.

In a possible design, the voice feature information is voiceprint model information.

In a possible design, that the continue conversation intention determining unit determines whether received first voice information and received second voice information are from a same user includes: The continue conversation intention determining module determines, based on direction information or distance information of a user when receiving the first voice information and the second voice information, whether a sender of the second voice information and a sender of the first voice information are the same user.

In a possible design, the continue conversation intention determining module uses infrared sensing to detect the distance information of the user, or uses a microphone array to detect the direction information of the user.

In a possible design, that the continue conversation intention determining module determines whether received first voice information and received second voice information are from a same user includes: The continue conversation intention determining module determines, based on facial feature information of a user when receiving the first voice information and the second voice information, whether a sender of the second voice information and a sender of the first voice information are the same user.

In a possible design, after determining that the sender of the second voice information and the sender of the first voice information are the same user, the continue conversation intention determining module further determines whether a face orientation of the user meets a preset threshold.

In a possible design, the determining whether a face orientation of the user meets a preset threshold includes: determining an offset between a visual center point of a voice interaction interface and a camera position, and determining, based on the offset, whether the face orientation of the user meets the preset threshold.

In a possible design, the terminal further includes a voice interaction interface display module, configured to: after the terminal enters a voice interaction working state, display a first voice interaction interface, and after the terminal outputs the processing result for the first voice information, display a second voice interaction interface. The first voice interaction interface is different from the second voice interaction interface.

According to a third aspect, an embodiment of this application provides a conference system for implementing intelligent voice interaction. The conference system includes any terminal in the foregoing aspects and at least one server. The terminal is connected to the at least one server through a network to implement intelligent voice interaction. The server includes a voiceprint recognition server, a facial recognition server, a voice recognition and semantic understanding server, a voice synthesis server, and a session intention recognition server.

According to a fourth aspect, an embodiment of this application provides a chip, including a processor and a memory. The memory is configured to store a computer-executable instruction, and the processor is connected to the memory. When the chip runs, the processor executes the computer-executable instruction stored in the memory, to enable the chip to perform any one of the foregoing intelligent voice interaction methods.

According to a fifth aspect, an embodiment of this application provides a computer storage medium. The computer storage medium stores an instruction, and when the instruction is run on a computer, the computer is enabled to perform any one of the foregoing intelligent voice interaction methods.

According to a sixth aspect, an embodiment of this application provides a computer program product. The computer program product includes an instruction, and when the instruction is run on a computer, the computer is enabled to perform any one of the foregoing intelligent voice interaction methods.

In addition, for technical effects brought by any design in the second aspect to the sixth aspect, refer to technical effects brought by different design methods in the first aspect. Details are not described herein again.

It may be understood that any one of the device, computer storage medium, computer program product, chip, or system for intelligent voice interaction that is provided above is configured to implement the corresponding method provided above. Therefore, for beneficial effects that can be achieved by the device, computer storage medium, computer program product, chip, or system for intelligent voice interaction, refer to the beneficial effects of the corresponding method, and details are not described herein again.

### BRIEF DESCRIPTION OF DRAWINGS

FIG. 1 is a schematic diagram of a system for implementing voice interaction according to an embodiment of the present invention;
FIG. 2 is a schematic flowchart of a voice interaction method according to an embodiment of the present invention;
FIG. 3 is a schematic diagram of an embodiment of determining whether senders of voice information are the same according to an embodiment of the present invention;
FIG. 4 is a schematic diagram of an algorithm for considering an orientation deviation when calculating a face orientation of a user according to an embodiment of the present invention;
FIG. 5 is a schematic diagram of an embodiment of an interaction interface change in a voice interaction process according to an embodiment of the present invention;
FIG. 6 is a schematic diagram of an intelligent terminal device according to an embodiment of the present invention; and
FIG. 7 is a schematic diagram of another intelligent terminal device according to an embodiment of the present invention.

### DESCRIPTION OF EMBODIMENTS

The following describes some terms in the embodiments of this application, to facilitate understanding of a person skilled in the art.

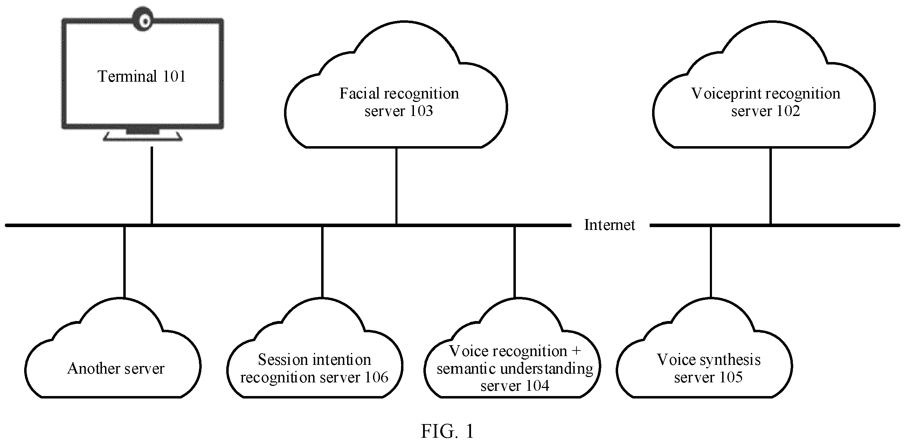

FIG. 1 is a schematic diagram of a system 100 for implementing voice interaction according to an embodiment of the present invention. The system includes a voice terminal 101, a voiceprint recognition server 102, a facial recognition server 103, a voice recognition and semantic understanding server 104, a voice synthesis server 105, and a session intention recognition server 106. The intelligent voice terminal 101 is connected to the servers 102 to 106 through a network, and functions of the network elements are further described as follows.

The terminal 101 is responsible for functions such as voice collection, image collection, wakeup detection, conversation management, control management, a status indication, sound playing, and content display.

Specifically, the terminal 101 may be an intelligent voice terminal, and may detect a voice interaction indication initiated by a user, for example, a wakeup keyword said by the user, a button for initiating voice interaction, or some sounds or operations predefined by the user. The terminal responds to the voice interaction indication initiated by the user, and enters a voice interaction working state. Different from an indication, such as pure detection of the wakeup keyword, for initiating voice interaction, the voice interaction working state, or referred to as a voice interaction conversation state, is a state in which the terminal 101 may invoke various processing resources to process received voice information, and output a corresponding processing result or operation. After receiving first voice information sent by the user, the terminal device 101 outputs a processing result for the first voice information, for example, answering a question of the user, and triggering operations such as joining a conference or turning on a microphone. After executing an instruction corresponding to the first voice information, the terminal 101 may further determine whether the user intends to continue a conversation. Specifically, when receiving second voice information, the terminal 101 may determine that a sender of the second voice information and a sender of the first voice information are a same user, and output a processing result for the second voice information. If determining that the senders are different users, the terminal 101 ends the voice interaction working state. A manner of determining whether the senders are the same user may be completed based on information such as facial recognition, a direction and/or a distance of a speaker, and a voice feature of a user. The terminal 101 may further determine whether the user focuses on a current session and intends to continue the conversation. For example, the terminal 101 determines whether a face orientation of the user meets a preset threshold, and outputs the processing result for the second voice information only after the face orientation meets the preset threshold. Otherwise, the terminal 101 ends the voice interaction working state. Further, the terminal 101 considers a deviation in determining the face orientation of the user when projection of a voice interaction interface and projection of a screen camera do not overlap in a normal direction. Specifically, when the face orientation of the user is determined, if a display screen of the terminal is relatively wide, projection of a visual center position of a voice assistant interface and projection of a camera position may not overlap in the normal direction. In this case, when the user gazes at the voice assistant interface, there may be a face orientation deviation for the camera. In other words, the camera may consider that the user does not face the screen straight, but the user actually faces the voice assistant interface and is engaged in a conversation. Therefore, when the camera is used as a center position to determine the face orientation of the user, the deviation needs to be considered.

The terminal 101 may further prompt the user of a current working state through different UI interfaces, for example, present a first voice interaction interface when entering the voice interaction working state. After outputting the processing result for the first voice information, the terminal 101 presents a voice interaction interface, for example, a simpler second voice interaction interface, that is different from the first voice interaction interface. After determining that the user does not intend to continue the conversation, the terminal 101 cancels all voice interaction interfaces.

The terminal 101 may be a smartphone, a smart home product (for example, a smart speaker), a smart vehicle-mounted device, a smart wearable device, a smart robot, a conference terminal, or the like, and this is reasonable. It may be understood that a function required by the terminal 101 in a voice interaction process may be implemented by connecting the terminal 101 to a related server through a network, namely, the terminal 101 may work in a communication connection manner with the servers 102 to 106. Alternatively, the terminal 101 itself may integrate all or some functions required for implementing all intelligent voice interaction in this embodiment of the present invention. In addition, the servers 102 to 106 are merely example divisions in terms of functions. In an implementation, the servers 102 to 106 may have different function combinations or provide another service for the terminal.

The voiceprint recognition server 102 generates a voiceprint model of a speaker based on voice data collected by the terminal 101, and performs a voiceprint comparison of the speaker, to confirm an identity of the speaker. The voiceprint recognition server 102 returns a result to the intention recognition server 106.

The facial recognition server 103 detects a face in an image collected by the voice terminal, and may further calculate the face orientation and perform user identity recognition. The facial recognition server 103 returns a result to the intention recognition server 106.

The voice recognition and semantic understanding server 104 converts a voice signal collected and uploaded by the terminal into a text and semantics, and sends the text and the semantics to the terminal 101 or another server for processing.

The voice synthesis server 105 synthesizes, into a voice, a text that the terminal 101 requests a loudspeaker to broadcast, and sends the voice back to the terminal 101.

The session intention recognition server 106 receives information (a voiceprint, a face, or a sound source direction and/or the distance of the speaker) returned by the voiceprint recognition server, the facial recognition server, or an infrared sensing apparatus and a microphone array that are on the terminal. The session intention recognition server 106 comprehensively determines whether the speaker has an intention of continuing the conversation, and sends a result to the terminal 101.

A system for implementing voice interaction in this embodiment of the present invention supports, by enhancing in the voice interaction process, conversation intention recognition of the speaker, that a voice command can be continuously sent to the system without the user saying the wakeup keyword again (or another wakeup manner) after a session. For example, the system decides, by determining whether a person who continues speaking is the same speaker, whether to continue to respond to received voice information. This effectively reduces redundant wakeup in the voice interaction process. At the same time, a voice signal generated when another person interrupts the speaker or when the speaker communicates with the another person is intelligently filtered out. This effectively reduces a false response of the system, improves smoothness and accuracy of the voice interaction, and improves user experience. The system in this embodiment further supports using the camera to collect the face orientation, to determine an intention that is of the user and that is of continuing the conversation, so that recognition accuracy of the intention that is of the speaker and that is of continuing the conversation is improved. The system in this embodiment supports adding, to an existing interaction interface, a UI interface, for example, a half-wakeup (wakeup delay) state UI, after a first session (which may include an appropriate delay after the first session) ends. This ensures simplicity of the interface and reduces interference, and can also effectively notify the user of the current working state of the system. It should be noted that, in this embodiment of the present invention, voice-to-text conversion or semantic analysis does not need to be performed on recognition of the intention that is of the user and that is of continuing the conversation (speaker recognition and face orientation recognition). Therefore, it is relatively easy to deploy and implement.

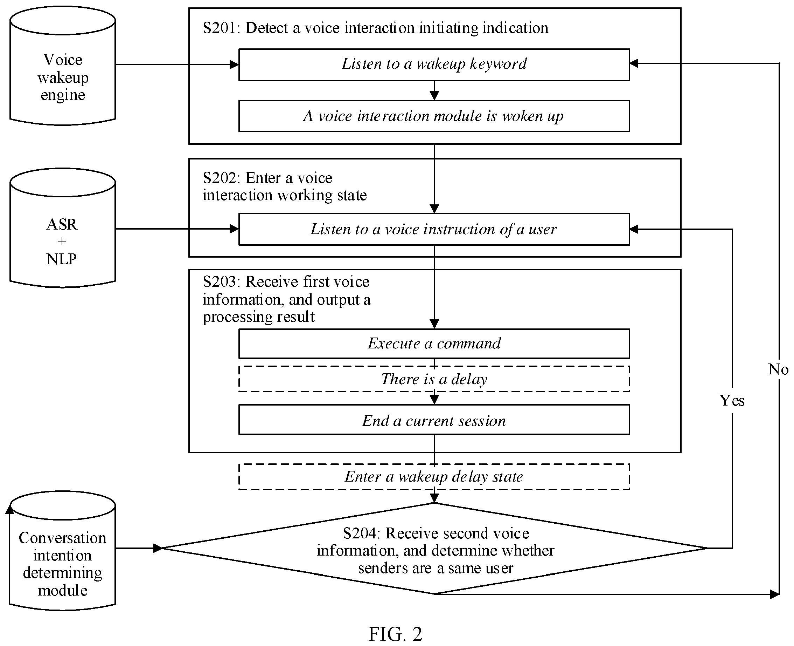

An embodiment of the present invention further provides a voice interaction method based on the system in FIG. 1. As shown in FIG. 2, the method includes the following steps.

S201: Detect a voice interaction initiating indication.

The voice interaction initiating indication may also be referred to as an indication that wakes up a terminal to enter a voice interaction state. As described above, the voice interaction initiating indication may have a plurality of forms, for example, a wakeup keyword "meeting" said by a user, a button clicked by the user to initiate voice interaction, or a sound predefined by another user.

S202: A terminal enters a voice interaction working state in response to the voice interaction initiating indication.

The user says the wakeup keyword "meeting" or "Hi, Scotty". After detecting the wakeup keyword, the system plays an answer prompt tone, and enters a voice instruction listening state (which is also a type of voice interaction working state). The terminal may further display a voice assistant user interface on a screen. The interface includes content such as command prompt information and a voice system status indication. The terminal may interact with the user through anASR service, an NLP service, and a conversation management function. The ASR is automatic speech recognition, and the NLP is natural language processing.

S203: The terminal receives first voice information, and outputs a processing result for the first voice information.

Then, the user says a voice instruction, such as "Join a conference". A voice signal is recognized (locally recognized or sent to a voice recognition server), and a recognition result is returned. A conference terminal performs a task of joining a conference based on the returned result.

After the conference terminal performs the task of joining a conference based on the returned result, a current session may not immediately end, namely, there may be a given delay. Because the user may immediately send a new instruction again, and the delay is usually relatively short, for example, five seconds, it is unnecessary to immediately enter a session intention determining state (for example, a half-wakeup state). It may be considered that this session ends after the delay ends.

S204: The terminal receives second voice information, and determines whether a sender of the second voice information and a sender of the first voice information are a same user; and if determining that the senders are the same user, the terminal outputs a processing result in response to the second voice information, or if determining that the senders are different users, the terminal ends the voice interaction working state.

After the terminal outputs the processing result for the first voice information (or after a specific delay), the terminal enters the session intention determining state (for example, the half-wakeup state). In this case, the second voice information sent by the terminal is received. If needing to invite another person to join a conference, the user may directly say "call Zhang San" without saying the wakeup keyword again. A terminal conversation intention recognition server determines, based on an identity of a speaker or further based on a face orientation, that the voice instruction is sent to a voice assistant. In this case, the terminal sends a voice segment to the voice recognition server for recognition, and starts a normal conversation flow.

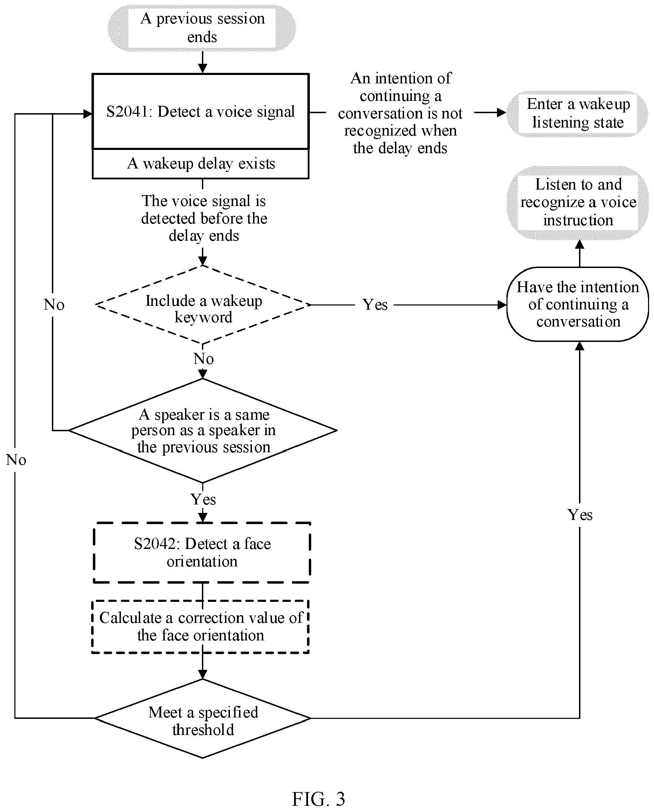

FIG. 3 is a schematic diagram of an embodiment of determining whether a sender of second voice information and a sender of first voice information are the same according to an embodiment of the present invention.

S2041: The terminal detects a second voice signal.

Optionally, if detecting the wakeup keyword, the terminal certainly may enter the voice interaction working state again.

A method for determining whether the senders are a same person may be comparing voice feature information, for example, comparing voiceprints. Specifically, when receiving a first voice signal, the user obtains voice feature information, for example, voiceprint information, of the first voice signal. After the second voice information is received, a voice feature of the second voice information is also extracted for comparison. If a given threshold is met, it is determined that the senders are the same user. If the senders are different users, the voice interaction working state is ended. In this case, after the speaker joins the conference, if another person speaks around the speaker (excluding the wakeup keyword), and a speaker continue conversation intention recognition server determines, based on that the speaker is not a same person as a speaker in a previous session, that the speaker has no intention of continuing the conversation, and the speaker continue conversation intention recognition server does not respond to the speaker.

Optionally, when detecting the second voice signal, the terminal may further determine, by using infrared sensing to detect a distance between the speaker and the terminal, and a direction that is of the speaker and that is relative to the terminal, whether the senders are the same person. Alternatively, the terminal determines, through facial recognition, whether the senders are the same user. It may be understood that when receiving the first voice signal, the user also obtains distance information or face information of a sender of the first voice signal. Therefore, the distance information or the face information of the sender of the first voice signal is compared with distance information or face information of a sender of the second voice signal, to determine whether the senders are the same user.

S2042: Detect a face orientation. After joining the conference, if the user may not need to send another voice instruction, and wants to talk with a colleague nearby, the user may face the colleague and normally speak to the colleague. In this case, whether the user faces the screen straight may be further determined through the face orientation, to determine a session intention of the user. For example, determining is performed by calculating an angle of a face orientation deviation of the user, or through a head pose estimate (Head Pose Estimate, HPE) technology. To be specific, a problem of a head orientation of a person is determined in a digital image through a method of computer vision and pattern recognition, and head posture direction parameters, namely, a head position parameter (x, y, z) and a direction angle parameter (Yaw, Pitch, Roll), are recognized based on a spatial coordinate system. Based on different estimation results, estimation is classified into discrete rough head posture estimation (a single image), and continuous fine head posture estimation (a video). Details are not described herein in this embodiment of the present invention. If a detection result of the face orientation does not meet a specified threshold requirement, a conversation intention recognition server may determine that the user has no intention of continuing the conversation, and the system does not respond to the speaker, that is, the system exits the voice interaction working state.

The method for implementing voice interaction in this embodiment of the present invention supports, by enhancing in a voice interaction process, conversation intention recognition of the speaker, that a voice command can be continuously sent to the system without the user saying the wakeup keyword again (or another wakeup manner) after a session. For example, whether received voice information continues to be responded to is decided by determining whether a person who continues speaking is the same speaker. This effectively reduces redundant wakeup in the voice interaction process. A voice signal generated when another person interrupts the speaker or when the speaker communicates with the another person is intelligently filtered out. This effectively reduces a false response of the system, improves smoothness and accuracy of the voice interaction, and improves user experience.

The system in this embodiment further supports using a camera to collect the face orientation, to determine an intention that is of the user and that is of continuing the conversation, so that accuracy of recognition of the intention that is of the speaker and that is of continuing the conversation is improved. It should be noted that, in this embodiment of the present invention, voice-to-text conversion or semantic analysis does not need to be performed on the recognition of the intention that is of the user and that is of continuing the conversation (speaker recognition and face orientation recognition). Therefore, it is relatively easy to deploy and implement.

Further, in this embodiment of the present invention, a deviation in determining the face orientation of a user when projection of a voice interaction interface and projection of a screen camera do not overlap in a normal direction. Specifically, because a common algorithm uses a camera as a reference to determine the face orientation of the user, if a display screen of the terminal is relatively wide, projection of a visual center position of a voice assistant interface and projection of a camera position may not overlap in the normal direction. In this case, when the user gazes at the voice assistant interface (has a conversation intention), there may be a face orientation deviation for the camera. That is, the camera may consider that the user does not face the screen straight. Therefore, when the camera is used as a center position to determine the face orientation of the user, the deviation needs to be considered.

This embodiment provides a face orientation correction algorithm, used to detect the face orientation of a user and determine whether the face orientation of the user meets a requirement. There are two cases for the camera: a fixed camera and a camera with a pan-tilt-zoom patrol target tracking camera. When projection is aligned, if the user faces a visual interaction interface straight (namely, faces the camera straight), the pan-tilt-zoom camera does not generate an angle deviation. If the user does not face the camera (the interaction interface) straight, the camera may determine, based on the face orientation algorithm, whether the user faces the screen straight. For example, the angle (Δ = a) of the face orientation deviation of the user is calculated for confirmation. In a case of the fixed camera, a user position (a sound source) may be located by a microphone array, to form a connection line between the user and a microphone voice receiving point. The connection line and a connection line between the user position and a camera position form an included angle, and an included angle value is used to determine whether the face orientation of the user meets a requirement.

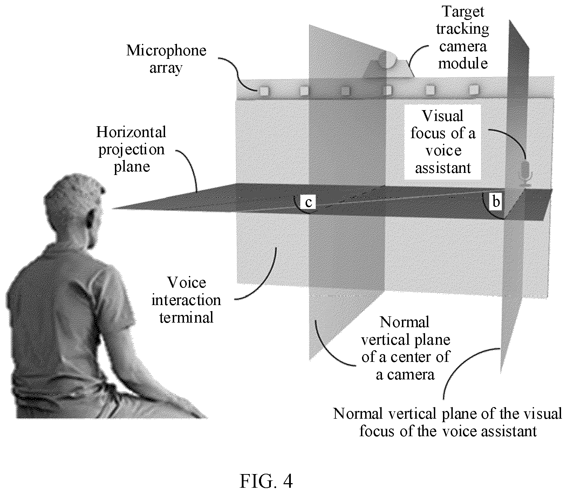

Similarly, in a case of the pan-tilt-zoom camera, if the projection of the visual center position of the voice assistant interface (which may be obtained by the system or reported by the voice assistant) and the projection of the camera position (which may be fixedly configured) are not aligned in the normal direction, a connection line between the user position and the visual center position, and the connection line between the user position and the camera position form an included angle. Therefore, when a deviation angle Δ is calculated, the included angle needs to be considered. As shown in FIG. 4, it is assumed that:
a is equal to a lateral (left and right) deviation angle of a face image (In the figure, if a face is rightward, a value of a is a negative number; if the face is leftward, the value of a is a positive number);
b is equal to an included angle between a normal direction of the screen and projection that is of a connection line between a sound source of the speaker and a visual focus of the voice assistant and that is on a horizontal plane (In the figure, when the face is on a right side of a normal vertical plane of the visual focus of the voice assistant, a value of b is a negative number);
c is equal to an included angle between the normal direction of the screen and projection that is of a connection line between the camera and a face of the speaker (In the figure, when the face is on a right side of a normal vertical plane of a center of the camera, a value of c is a negative number).

Then, a deviation angle between the face orientation and a visual focus direction that is of the voice assistant and that the user looks straight is Δ2 = a + (b ― c).

Herein, the deviation angle Δ2 is a correction value of the face orientation calculated in consideration of a case in which the visual center of the voice interaction interface is not aligned with the camera.

According to the method in this embodiment of the present invention, the face orientation of the user during the conversation can be more accurately detected, to implement more intelligent and efficient voice interaction. In particular, in a scenario in which a position of a large screen and a position of the voice interaction interface on the screen may change flexibly, more accurate recognition of the intention that is of the user and that is of continuing the conversation can be implemented, to reduce misjudgment.

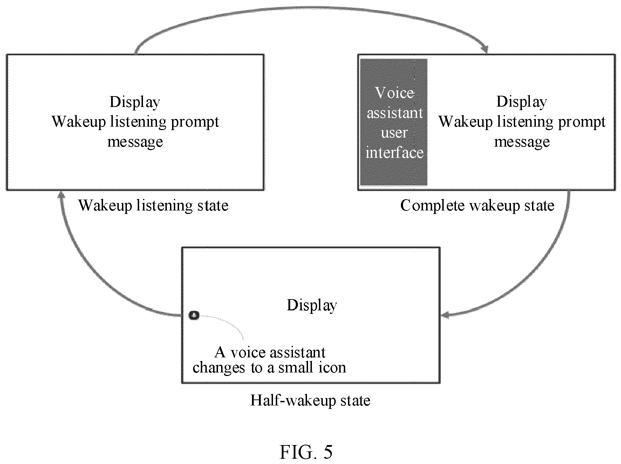

As shown in FIG. 5, the present invention further provides an embodiment of a change in a voice interaction interface. In this embodiment of the present invention, a half-wakeup state indication interface is added to a user interaction interface. In a wakeup listening state, when a system detects a wakeup keyword, a voice assistant user interface (UI) (a first voice interaction interface) is popped. Information displayed on the screen includes a command prompt message, an announcement, a text result of voice recognition, an animation icon of an assistant working state. After a current session ends, the system enters the half-wakeup state, and the interface does not completely exit, but changes to a small icon (a second voice interaction interface), to notify a user that the system is in the half-wakeup state (wakeup delay). In this case, the system determines whether the user has the intention of continuing the conversation. After the half-wakeup state ends, the system completely exits a voice interaction state, and enters the wakeup listening state.

In this embodiment, a UI interface, for example, a half-wakeup (wakeup delay) state UI, displayed after a first session (which may include an appropriate delay after the first session) ends is added to an existing interaction interface. This ensures simplicity of the interface, reduces interference, and can effectively notify the user of a current working state of the system.

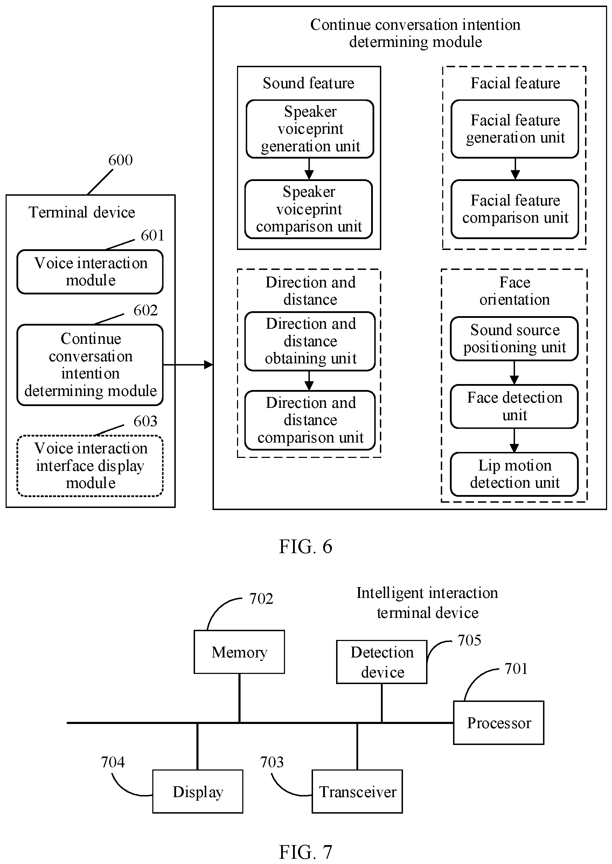

An embodiment of the present invention further provides a terminal device 600. As shown in FIG. 6, the terminal device is a terminal for implementing intelligent voice interaction, and includes a voice interaction module 601 and a continue conversation intention determining module 602. The following specifically describes functions of modules of the terminal device 600.

The voice interaction module 601 is configured to: implement intelligent voice interaction, and output a targeted processing result based on received voice information.

The continue conversation intention determining module 602 is configured to determine whether received first voice information and received second voice information are from a same user. The first voice information is voice information received after the voice interaction unit responds to a voice interaction initiating indication, and the second voice information is voice information received after the voice interaction module 601 outputs a processing result for the first voice information.

Optionally, the continue conversation intention determining module 602 determines, based on a comparison result of a feature of the first voice information and a feature of the second voice information, whether a sender of the second voice information and a sender of the first voice information are the same user.

Optionally, the voice feature information is voiceprint model information. As shown in FIG. 6, in this case, the continue conversation intention determining module 602 includes a speaker voiceprint generation unit and a speaker voiceprint comparison unit that are separately configured to: obtain a voiceprint of the first voice information and a voiceprint of the second voice information and, perform comparison, and correspondingly use a comparison result as a determining result of a user's intention of continuing a conversation.

Optionally, the continue conversation intention determining module determines, based on direction information or distance information of a user when receiving the first voice information and the second voice information, whether a sender of the second voice information and a sender of the first voice information are the same user.

Optionally, the continue conversation intention determining unit uses infrared sensing to detect the distance information of the user, or uses a microphone array to detect the direction information of the user. As shown in FIG. 6, in this case, the continue conversation intention determining module includes a direction and distance obtaining unit and a direction and distance comparison unit that are separately configured to: obtain direction information and distance information of a user when the terminal receives the first voice information and the second voice information, perform comparison, and correspondingly use a comparison result as a determining result of the user's intention of continuing a conversation.

Optionally, the continue conversation intention determining module determines, based on facial feature information of a user when receiving the first voice information and the second voice information, whether a sender of the second voice information and a sender of the first voice information are the same user. As shown in FIG. 6, in this case, the continue conversation intention determining module includes a facial feature generation unit and a facial feature comparison unit that are separately configured to: obtain a facial feature of a user when the terminal receives the first voice information and the second voice information, perform comparison, and correspondingly use a comparison result as a determining result of the user's intention of continuing a conversation.

Optionally, after determining that the sender of the second voice information and the sender of the first voice information are the same user, the continue conversation intention determining module further determines whether a face orientation of the user meets a preset threshold. As shown in FIG. 6, in this case, the continue conversation intention determining module includes a sound source positioning unit and a face detection unit. The sound source positioning unit is configured to position, by using a microphone array, a user position (a sound source) or a voice direction of the user. The face detection unit is configured to detect a facial position of the user. Therefore, the face orientation of the user is calculated. For a specific algorithm, refer to the description in S2042 in the foregoing method embodiment. Details are not described herein again. The face orientation of the user is obtained and compared with the specific threshold, and a comparison result is correspondingly used as a determining result of the user's intention of continuing a conversation.

Optionally, when it is determined whether the face orientation of the user meets the preset threshold, an offset between a visual center point of a voice interaction interface and a camera position may be further considered. Whether the face orientation of the user meets the preset threshold is determined based on the offset, and a determining result is correspondingly used as a determining result of the user's intention of continuing a conversation.

Optionally, when the face orientation is determined, whether the user is speaking may be further detected by a lip motion detection unit, to further confirm the intention that is of the user and that is of continuing a conversation. For example, sometimes a voice of the user is relatively low and is not detected by the terminal, but a lip motion that the user has is detected. In addition to foregoing determining of the same user and face orientation recognition, the terminal can determine that the user is actually performing a further conversation, and maintains a voice interaction state, to avoid an early exit.

Optionally, the terminal further includes a voice interaction interface display module 603, configured to: after the terminal enters the voice interaction working state, display a first voice interaction interface, and after the terminal outputs the processing result for the first voice information, display a second voice interaction interface. The first voice interaction interface is different from the second voice interaction interface. For example, the second voice interaction interface is simpler, and does not cause interference to the user.

It may be understood that, various information required by the continue conversation intention determining module may be collected and obtained by the terminal itself, or may be obtained by a related device or server connected through a network or a cable. Even the continue conversation intention determining module itself may also be implemented by the device or server connected through a network or a cable. In other words, the terminal serves only as an interface for performing voice interaction with the user, is responsible for collecting user information such as a voice and an image, and is responsible for outputting a processed voice and processed image information, to cloudify all other functions.

The terminal device provided in this embodiment of this application is configured to perform the methods in all the foregoing embodiments. Therefore, for a technical effect that can be obtained by the terminal device, refer to the foregoing method embodiments, and details are not described herein again.

The "module" or the "unit" in FIG. 6 may be an application-specific integrated circuit (Application Specific Integrated Circuit, ASIC), an electronic circuit, a processor or a memory that executes one or more software or firmware programs, a combinational logic circuit, or another component providing the foregoing functions. When the integrated unit or module is implemented in a form of a software functional unit and sold or used as an independent product, the integrated unit or module may be stored in a computer-readable storage medium.

FIG. 7 is a schematic structural diagram of a terminal device 700 according to an embodiment of this application. This structure includes a processor 701, a memory 702, a transceiver 703, a display 704, and a detector 705 (a microphone, or further includes a camera, an infrared detection device, and the like). The processor 701 is connected to the memory 702 and the transceiver 703. For example, the processor 801 may be connected to the memory 702 and the transceiver 703 through a bus.

The processor 701 may be configured as the terminal device 700 to perform a corresponding function in the foregoing embodiment. The processor 701 may be a central processing unit (English: central processing unit, CPU), a network processor (English: network processor, NP), a hardware chip, or any combination thereof. The hardware chip may be an application-specific integrated circuit (English: application-specific integrated circuit, ASIC), a programmable logic device (English: programmable logic device, PLD), or a combination thereof. The PLD may be a complex programmable logic device (English: complex programmable logic device, CPLD), a field programmable gate array (English: field-programmable gate array, FPGA), a generic array logic (English: generic array logic, GAL), or any combination thereof.

The memory 702 is configured to store program code and the like. The memory 702 may include a volatile memory (English: volatile memory), for example, a random access memory (English: random access memory, RAM for short). The memory 702 may also include a nonvolatile memory (English: non-volatile memory), for example, a read-only memory (English: read-only memory, ROM for short), a flash memory (English: flash memory), a hard disk (English: hard disk drive, HDD for short), or a solid-state drive (English: solid-state drive, SSD for short). The memory 702 may further include a combination of memories of the foregoing types.

The detector 705 includes an audio pickup device such as a microphone, and is configured to send voice information (for example, first voice information or second voice information) sent by a user to the processor for processing or to perform sound field positioning. The detector 705 may further include a ranging apparatus such as a camera and infrared sensing. The detector 705 collects user related information (a face, a distance, a direction, and the like), and sends the user related information to the processor 701 for processing.

The transceiver 703 (optional) may be a communications module or a transceiver circuit, and is configured to implement, in the foregoing embodiment, transmission of information such as possible data or signaling between the terminal device and another network unit such as each server.

The processor 701 may invoke the program code to perform the operations in the method embodiments shown in FIG. 2 to FIG. 5.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instruction is loaded and executed on a computer, the procedure or functions according to the embodiments of the present invention are all or partially generated. The computer may be a general-purpose computer, a special-purpose computer, a computer network, or another programmable apparatus. The computer instruction may be stored in a computer readable storage medium, or may be transmitted by using the computer readable storage medium. The computer instruction may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any available medium accessible to a computer. For example, the computer instruction may be stored or transmitted through a magnetic medium (for example, a floppy disk, a hard disk, or a magnetic tape), an optical medium (for example, a DVD), or a semiconductor medium (for example, a solid state drive Solid State Disk (SSD)).

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A voice interaction method, wherein the method comprises:
detecting, by a terminal, a voice interaction initiating indication;
entering, by the terminal, a voice interaction working state in response to the voice interaction initiating indication;
receiving, by the terminal, first voice information, and outputting a processing result for the first voice information;
receiving, by the terminal, second voice information, and determining whether a sender of the second voice information and a sender of the first voice information are a same user; and
if determining that the senders are the same user, outputting, by the terminal, a processing result in response to the second voice information, or
if determining that the senders are different users, ending, by the terminal, the voice interaction working state.

2. The method according to claim 1, wherein the determining, by the terminal, whether a sender of the second voice information and a sender of the first voice information are a same user comprises:
when receiving the first voice information and the second voice information, separately obtaining, by the terminal, a feature of the first voice information and a feature of the second voice information; and
determining, by the terminal based on a comparison result of the feature of the first voice information and the feature of the second voice information, whether the sender of the second voice information and the sender of the first voice information are the same user.

3. The method according to claim 1, wherein the voice feature information is voiceprint model information.

4. The method according to claim 1, wherein the determining, by the terminal, whether a sender of the second voice information and a sender of the first voice information are a same user comprises:
separately obtaining, by the terminal, direction information or distance information of a user when receiving the first voice information and the second voice information; and
determining, by the terminal based on the direction information or the distance information of the user, whether the sender of the second voice information and the sender of the first voice information are the same user.

5. The method according to claim 4, wherein the terminal uses infrared sensing to detect the distance information of the user, and determines whether the senders are the same user based on the distance information of the user when receiving the first voice information and the second voice information; or
the terminal uses a microphone array to detect the direction information of the user, and determines, based on the direction information of the user when receiving the first voice information and the second voice information, whether the senders are the same user.

6. The method according to claim 1, wherein the determining, by the terminal, whether a sender of the second voice information and a sender of the first voice information are a same user comprises:
separately obtaining, by the terminal, facial feature information of a user when receiving the first voice information and the second voice information; and
determining, by the terminal by comparing the facial feature information of the user, whether the sender of the second voice information and the sender of the first voice information are the same user.

7. The method according to any one of claims 1 to 6, wherein the method further comprises: after determining that the sender of the second voice information and the sender of the first voice information are the same user, further determining, by the terminal, whether a face orientation of the user meets a preset threshold; and when the face orientation of the user meets the preset threshold, outputting, by the terminal, the processing result for the second voice information, and otherwise, ending, by the terminal, the voice interaction working state.

8. The method according to claim 7, wherein the determining whether a face orientation of the user meets a preset threshold comprises: determining an offset between a visual center point of a voice interaction interface and a camera position, and determining, based on the offset, whether the face orientation of the user meets the preset threshold.

9. The method according to any one of claims 1 to 8, wherein
the entering, by the terminal, a voice interaction working state further comprises: displaying, by the terminal, a first voice interaction interface;
after the terminal outputs the processing result for the first voice information, displaying, by the terminal, a second voice interaction interface, wherein the first voice interaction interface is different from the second voice interaction interface; and
the ending, by terminal, the voice interaction working state comprises: canceling, by the terminal, the second voice interaction interface.

10. A terminal for implementing intelligent voice interaction, wherein the terminal comprises a voice interaction module and a continue conversation intention determining module;
the voice interaction module is configured to: implement intelligent voice interaction, and output a targeted processing result based on received voice information; and
the continue conversation intention determining module is configured to determine whether received first voice information and received second voice information are from a same user, wherein the first voice information is voice information received after the voice interaction module responds to a voice interaction initiating indication, and the second voice information is voice information received after the voice interaction module outputs a processing result for the first voice information.

11. The terminal according to claim 10, wherein that the continue conversation intention determining module is configured to determine whether received first voice information and received second voice information are from a same user comprises:
determining, by the continue conversation intention determining module based on a comparison result of a feature of the first voice information and a feature of the second voice information, whether a sender of the second voice information and a sender of the first voice information are the same user.

12. The terminal according to claim 11, wherein the voice feature information is voiceprint model information.

13. The terminal according to claim 10, wherein that the continue conversation intention determining unit is configured to determine whether received first voice information and received second voice information are from a same user comprises:
determining, by the continue conversation intention determining module based on direction information or distance information of a user when receiving the first voice information and the second voice information, whether a sender of the second voice information and a sender of the first voice information are the same user.

14. The terminal according to claim 13, wherein the continue conversation intention determining module uses infrared sensing to detect the distance information of the user, and determines whether the senders are the same user based on the distance information of the user when receiving the first voice information and the second voice information; or the continue conversation intention determining module uses a microphone array to detect the direction information of the user, and determines whether the senders are the same user based on the direction information of the user when receiving the first voice information and the second voice information.

15. The terminal according to claim 10, wherein that the continue conversation intention determining module is configured to determine whether received first voice information and received second voice information are from a same user comprises:
determining, by the continue conversation intention determining module based on facial feature information of a user when receiving the first voice information and the second voice information, whether a sender of the second voice information and a sender of the first voice information are the same user.

16. The terminal according to any one of claims 10 to 15, wherein after determining that the sender of the second voice information and the sender of the first voice information are the same user, the continue conversation intention determining module further determines whether a face orientation of the user meets a preset threshold.

17. The terminal according to claim 16, wherein the determining whether a face orientation of the user meets a preset threshold comprises: determining an offset between a visual center point of a voice interaction interface and a camera position, and determining, based on the offset, whether the face orientation of the user meets the preset threshold.

18. The terminal according to any one of claims 10 to 17, wherein the terminal further comprises a voice interaction interface display module, configured to: after the terminal enters a voice interaction working state, display a first voice interaction interface, and after the terminal outputs the processing result for the first voice information, display a second voice interaction interface, wherein the first voice interaction interface is different from the second voice interaction interface.

19. A conference system for implementing intelligent voice interaction, wherein the conference system comprises any terminal according to claims 10 to 17 and at least one server; the terminal is connected to the at least one server through a network to implement intelligent voice interaction; and the server comprises a voiceprint recognition server, a facial recognition server, a voice recognition and semantic understanding server, a voice synthesis server, and a session intention recognition server.

20. A computer-readable storage medium storing a computer program, wherein a processor executes the program to implement the method according to any one of claims 1 to 9.

21. A terminal for implementing intelligent voice interaction, comprising a memory, a processor, and a computer program that is stored in the memory and that is executable on the processor, wherein the processor executes the computer program to implement the method according to any one of claims 1 to 9.
